# EUROPEAN PATENT APPLICATION

(11) **EP 0 654 878 A1**
(43) Date of publication of application: **24.05.1995**
(21) Application number: 94116542.5
(22) Date of filing: 20.10.1994
(51) Int. Cl.: H02G 3/04

(54) **Raceway for electrical cables or the like with a cover which can be removed only by means of tools**

(30) Priority: 24.11.1993 IT GE930101
(71) Applicant: BOCCHIOTTI SOCIETA'PER L'INDUSTRIA ELETTROTECNICA S.P.A., I-16121 Genova (IT)
(72) Inventor: Bruzzone, Melchiorre, I-16121 Genova (IT)
(74) Representative: Porsia, Attilio, Dr.

(57) **Abstract**

Electrical cable-holder raceway with a cover which can be removed only by means of tools, comprising a duct element which is provided with a base and two lateral walls, and a cover which comprises a closing plane and two lateral limbs; at their free edge the lateral walls of the duct have a groove or pocket with a substantially G-shaped profile, and on their free end the lateral limbs of the cover have a wedge-shaped protrusion to be inserted in the groove, and on the inner surface of the lateral limbs there is a toothed projection which cooperates with the free end of the G-shaped groove.

## Description

The present invention relates to cable-holder raceways with a cover for electrical cables or the like.

Cable-holder raceways are known which are provided with a cover in which the cover is rendered integral with the raceway by means of inclusion of projections which exist in the cover, in a groove which exists on the inner walls of the raceway. In general however this type of closure can be forced simply by means of pressure applied to the lateral wall of the raceway. By this means, the cables contained therein are also accessible to people who are not qualified for maintenance, for example those who are inexpert, or more dangerously still, children.

Patents FR-A-2406327 and DE-OE-2516404 propose technical solutions for eliminating these problems. However both these solutions are based on the creation of a pair of fins which project from the inner side of the cover, and which are intended to engage with the elements of the raceway walls. These solutions are therefore complex and costly.

The object of the present invention is thus to provide a raceway which has a cover of a simple and economical design, in which the cover can be removed only by means of tools, and thus cannot be opened accidentally or by being forced by unqualified people.

For this purpose, a raceway is provided with a cover which can be removed only by means of tools, comprising a raceway with a base which can be connected to a surface, and two lateral walls, and a cover which comprises a closing plane and two lateral limbs, characterized in that on their free edge opposite the base, the lateral walls of the raceway each have a groove with a substantially G-shaped profile, and on their free end the lateral limbs of the cover have a wedge-shaped protrusion to be inserted in the groove, and a toothed projection on the inner surface of the limb which cooperates with the upper free end of the G-shaped groove.

Further advantages and features will become apparent from the following detailed description of an embodiment of the present invention, provided by way of non-limiting example, with reference to the attached drawings, in which:
Figure 1 is a transverse cross-section of the raceway with a cover according to the invention, shown in the closing stage; and
Figure 2 is a view similar to Figure 1 with the closing operation completed.

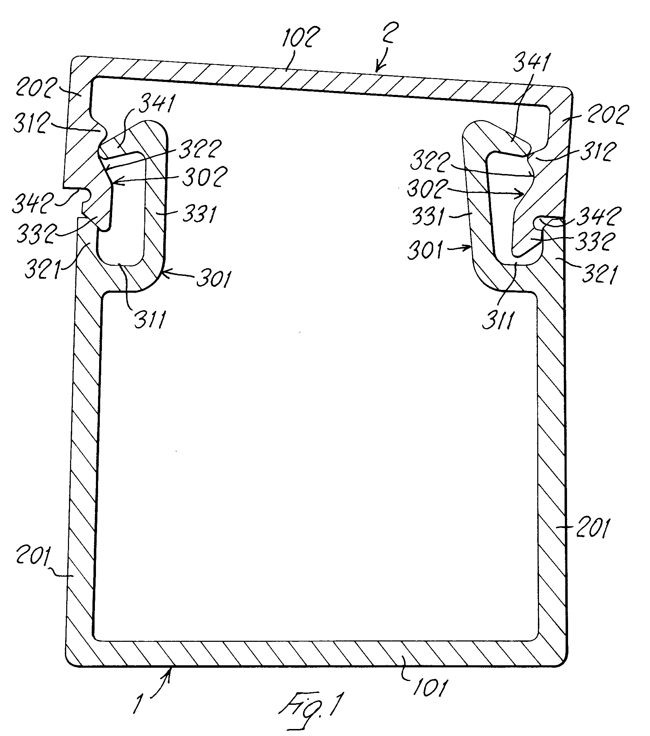

In Figure 1, 1 designates the cable-holder raceway according to the invention. This raceway comprises a base 101 which can be connected to the surface on which the raceway is to be installed. From this base 101 there extend two lateral walls 201; at the end of each of these lateral walls 201 there is a groove 301 with a substantially G-shaped profile, comprising an outer limb 321 which is a continuation of the lateral wall 201, a loop 311, an inner limb 331 which is essentially parallel to the lateral wall 201, and an end limb 341 of the groove which is inclined outwards and downwards relative to the limb 331, by an angle of less than 45°.

The raceway 1 is closed by a cover 2 which comprises a closing plane 102, and two lateral limbs 202 which extend from the longer sides of the closing plane 102. In the vicinity of the free end of the lateral limbs 202, there is a raiser system 302 which, going from the closing plane towards the free end, comprises the tooth 312, the depression 322 and the wedge-shaped protrusion 332; in its outward-facing surface, the protrusion contains the recess 342.

Figure 1 shows a raceway 1 according to the invention in the process of being closed by a cover 2. The wedge-shaped protrusion 332 of one of the limbs 202 of the cover has been engaged in the loop 311 of the lateral wall of the raceway, and the tooth 312 is supported on the end 341 of the groove 301. On the opposite side, the wedge-shaped protrusion 332 is still supported on the inclined edge of the outer limb 321 of the groove 301, and the end 341 of the groove is in the depression 322 of the raiser system 302.

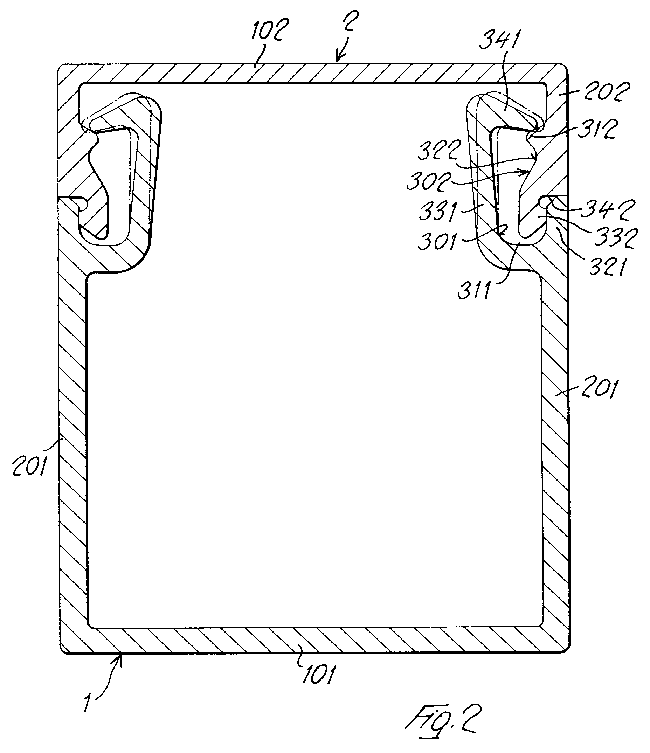

By exerting pressure downwards on the closing plane 102, the latter is snapped into the closing position as shown in Figure 2. In this condition, both the wedges 332 are firmly inserted in the loops 311 of the G-shaped grooves 301. The teeth 312 abut the ends 341 of the grooves 301, which are forced resiliently towards the inside of the recess by the teeth, as shown in Figure 2, by comparing the situation at rest (broken line) and the situation in the closing condition (continuous line); the raceway-cover assembly is thus more firmly closed. In addition, the limbs 321 are inserted in the recesses 342, thus locking the wedges 332 stably in the loop 311 of the G-shaped groove 301.

When this type of closing has been completed, the cover 2 can only be disengaged from the raceway 1 by using a tool. The raceway is thus prevented from being accessible to unqualified people.

## Claims

1. Electrical cable-holder raceway or the like with a cover which can be removed only by means of tools, comprising a duct element (1) which is provided with a base (101) and two lateral walls (201), and a cover (2) which comprises a closing plane (102) and two lateral limbs (202), characterized in that on their free edge, the lateral walls (201) of the raceway (1) have a groove or pocket (301) with a substantially G-shaped profile which is integral with the internodal body of the raceway, and on their free end the lateral limbs (202) of the cover have a wedge-shaped protrusion (332) to be inserted in the groove, and a toothed projection (312) in the inner surface of the lateral limb (202), which cooperates with the free end (341) of the G-shaped groove (301), rendering it resiliently taut during the stage of locking of the cover (2).
